# EUROPEAN PATENT SPECIFICATION

(11) **EP 2 947 581 B1**
(45) Date of publication and mention of the grant of the patent: **06.03.2019**
(21) Application number: 14196971.7
(22) Date of filing: 09.12.2014
(51) Int. Cl.: G06F 17/30

(54) **Interactive searching method and apparatus**
Interaktives Suchverfahren und Vorrichtung
Procédé et dispositif de recherche interactive

(30) Priority: 21.05.2014 CN 201410216843
(43) Date of publication of application: 25.11.2015
(73) Proprietor: Baidu Online Network Technology (Beijing) Co., Ltd, Beijing 100085 (CN)
(72) Inventor: Zhao, Shiqi, 100085 Beijing (CN); Wan, Wei, 100085 Beijing (CN); Li, Tingting, 100085 Beijing (CN); Sun, Liansheng, 100085 Beijing (CN); Zhou, Xiangyang, 100085 Beijing (CN)
(74) Representative: Romano, Giuseppe

(56) References cited:
- US-A1- 2007 255 795
- US-A1- 2009 281 966
- US-B1- 6 766 320

## Description

### FIELD

Embodiments of the present disclosure generally relate to an internet technology field, and more particularly, to an interactive searching method and apparatus.

### BACKGROUND

With a constant development of technology, a search engine has been an indispensable part in life and is more and more intellectualized. Currently, in an interactive search of the conventional search engine, a user inputs a search term, and the search engine returns search results associated with the search term and sequences the search results from top to bottom according to their own correlations with the search term. The user can browse and click the search results, and further select information or content that he is interested in or needs from the search results. The search engine may make use of a box computing technology and a knowledge map technology. The box computing technology is a technology in which the search engine provides the search result or a service according to the search term directly. The knowledge map technology is a technology in which the search engine organizes the knowledge associated with the search term and presents it as a knowledge map so as to satisfy a requirement of the user for background knowledge and knowledge extension.

In addition, the search engine may also provide needed sources for the user by an interactive question answering with the user based on a natural language.

Furthermore, the user can ask a deep question answering system to obtain a corresponding answer.

US2009281966A1 discloses an arrangement for virtually integrating a bot with a search functionality provided by an online search engine enables users of personal computers ("PCs"), mobile phones, and other devices to locate bot content in response to their search queries. The virtual integration enables bot content to be surfaced via the search engine. In response to a query, the search engine may return search results including links to one or more bots that are located on a presence-based network. When the user clicks on a link, a client application is launched on the PC or device that enables the user to converse with the bot using a natural language interface. The virtual integration also provides the bot with context of the user's last known query, or the query history.

US2007255795A1 discloses a framework and method to integrate a Search Service in an IM environment is provided. A Search Service is represented by one or more buddies or contacts of an IM user, which performs inline search by adding a buddy representing a Search Service to a new or existing IM conversation, and inputting search query as a normal IM message. The Search Service sends the search results back as a regular IM message to all parties participating in the IM conversation. A Search Service implements and runs persistently one or more IM client simulators (SEIMCS) according to the communication and application protocol of an IM system. The Search Service defines one or more universally unique identifiers (UUIDs), registers one or more IM members with the UUIDs to an IM service. It logs in the defined IM members to the IM system and publishes these IM members.

US6766320B1 discloses a search engine architecture is designed to handle a full range of user queries, from complex sentence-based queries to simple keyword searches. The search engine architecture includes a natural language parser that parses a user query and extracts syntactic and semantic information. The search engine architecture described herein always returns the best fully-parsed or partially-parsed interpretation possible.

### SUMMARY

Embodiments of the present disclosure seek to solve at least one of the problems existing in the related art to at least some extent.

Inventors have found following defects existing in the related art: when the user raises a question of a deep decision type, since the question involves a wide range of aspects, personal factors of one user are different from those of other ones and the conventional search engine has a poor comprehensive ability, the obtained search result is not precise enough and an artificial selection of the user is required. Moreover, an individual service for different users is lacked and the requirement of the user cannot be satisfied.

Accordingly, a first objective of the present disclosure is to provide an interactive searching method, which can obtain a searching requirement of a user accurately so as to obtain a precise search result for the user and to provide an individual service for different users, and thus requirements of the user can be satisfied.

A second objective of the present disclosure is to provide an interactive searching system.

In order to achieve above objectives, embodiments of a first aspect of the present disclosure provide an interactive searching method. The method includes: receiving by a client a first query; obtaining by the client a first search result associated with the first query; and displaying the first search result and an interaction region if the client determines that the first query belongs to a predetermined type.

With the interactive searching method according to examples of the present disclosure, by displaying the first query, the first search result and the interaction region configured to input interactive information in the second displaying part, an intelligent interaction with the user can be implemented when the user inputs the query of the deep decision type, such that the searching requirement of the user can be obtained accurately so as to provide a precise search result for the user and to provide an individual service for different users, thus satisfying the requirement of the user.

Embodiments of a second aspect of the present disclosure provide an interactive searching system.

With the interactive searching method according to examples of the present disclosure, by performing the query analyzing on the first query, the search engine can interact with the user intelligently when the user inputs a query of a deep decision type, such that a searching requirement of a user can be obtained accurately so as to obtain a precise search result for the user and to provide an individual service for different users, thus improving the search experience of the user.

An example of the present disclosure provide an interactive searching method. The method includes: obtaining by a search engine a first query; obtaining by the search engine a first search result associated with the first query; and generating a first feedback data configured to display the first search result associated with the first query and an interactive region in a search result webpage, if the search engine determines that the first query belongs to a predetermined type.

With the interactive searching method according to an aspect not forming part of the invention by displaying the first search result associated with the first query and the interactive region in the search result webpage and performing the query analyzing on the query input by the user, the search engine can interact with the user intelligently when the user inputs a query of a deep decision type, such that a searching requirement of a user can be obtained accurately so as to obtain a precise search result for the user and to provide an individual service for different users, thus satisfying requirements of the user.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of an interactive searching method according to an embodiment of the present disclosure;
Fig. 2 is a schematic diagram of an interactive searching method according to an embodiment of the present disclosure;
Fig. 3 is a schematic diagram of an interactive searching method according to another embodiment of the present disclosure;
Fig. 4 is a flow chart of an interactive searching method according to another example of the present disclosure;
Fig. 5 is a schematic diagram showing an interactive searching of an interactive searching system according to an embodiment of the present disclosure;
Fig. 6 is a block diagram of an interactive searching apparatus according to an example of the present disclosure;
Fig. 7 is a block diagram of an interactive searching apparatus according to another example of the present disclosure;
Fig. 8a is a flow chart of an interactive searching method according to another embodiment of the present disclosure;
Fig. 8b is a schematic diagram of a search result webpage according to an embodiment of the present disclosure; and
Fig. 9 is a block diagram of an interactive searching apparatus according to another example of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

In addition, terms such as "first" and "second" are used herein for purposes of description and are not intended to indicate or imply relative importance or significance. Thus, the feature defined with "first" and "second" may comprise one or more this feature. In the description of the present disclosure, "a plurality of' means two or more than two, unless specified otherwise.

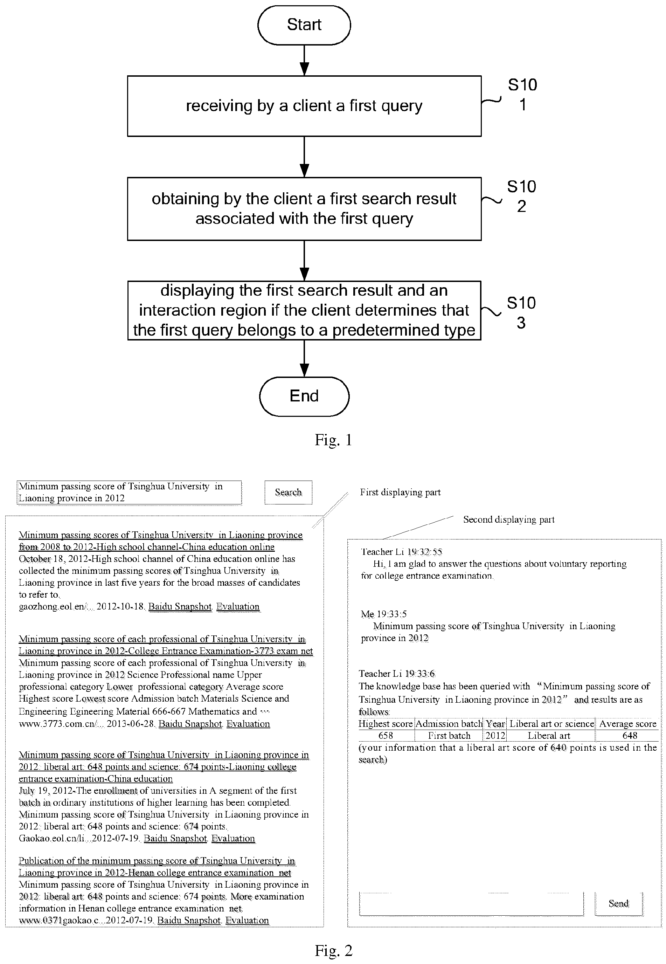

Fig. 1 is a flow chart of an interactive searching method according to an embodiment of the present disclosure. The embodiment of the present disclosure is described at a client side, and an interactive search therein is a search in which a search engine receives a search requirement of a user in an interactive mode based on a natural language and provides a search result to the user.

As shown in Fig. 1, the interactive searching method according to the embodiment of the present disclosure includes following steps.

At step S101, a client receives a first query.

In the embodiment of the present disclosure, the client may receive the first query input by the user in a search box and send the first query to the search engine. The first query may be a simple key word such as "the weather in Beijing" and "Liu Dehua" or a complex phrase such as "the minimum passing score of Peking University in Liaoning province in 2012".

At step S102, the client obtains a first search result associated with the first query.

In the embodiment of the present disclosure, the client sends the first query to the search engine after receiving the first query, and the search engine performs a search according to the first query and returns the first search result to the client. The client obtains the returned first search result associated with the first query. For example, the first query is "Liu Dehua", and the first search result is information associated with Liu Dehua such as a height, a birthday and a film thereof.

At step S103, the first search result and an interaction region are displayed if the client determines that the first query belongs to a predetermined type.

In an example of the present disclosure, when it is determined that the first query belongs to the predetermined type, the client provides a search result webpage including a first displaying part and a second displaying part. Specifically, when the first query is a query of a deep decision type such as "shopping guide", "voluntary reporting for college entrance examination" and "medical advice", the client displays the first query, the first search result and the interaction region configured to input interactive information in a dialogue search region (i.e. the second displaying part) besides displaying the first search result in a conventional search result displaying region (i.e. the first displaying part). For example, as shown in Fig. 2, the user inputs the first query "the minimum passing score of Tsinghua University in Liaoning province in 2012" which is the query of the deep decision type belonging to "voluntary reporting for college entrance examination" in the search box at a left side of the search result webpage, and the first search result is displayed in the conventional search result displaying region (i.e. the first displaying part) at the left side of the search result webpage, and the first query, the first search result and the interaction region (such as an input box) configured to input interactive information are displayed in the dialogue search region (i.e. the second displaying part) at a right side of the search result webpage simultaneously.

The client provides a search result webpage including the first displaying part if it is determined that the first query does not belong to the predetermined type. Specifically, when the first query is "Liu Dehua" which is not the query of the deep decision type, the client just displays the first search result in the conventional search result displaying region (i.e. the first displaying part), i.e., the second displaying part does not exist.

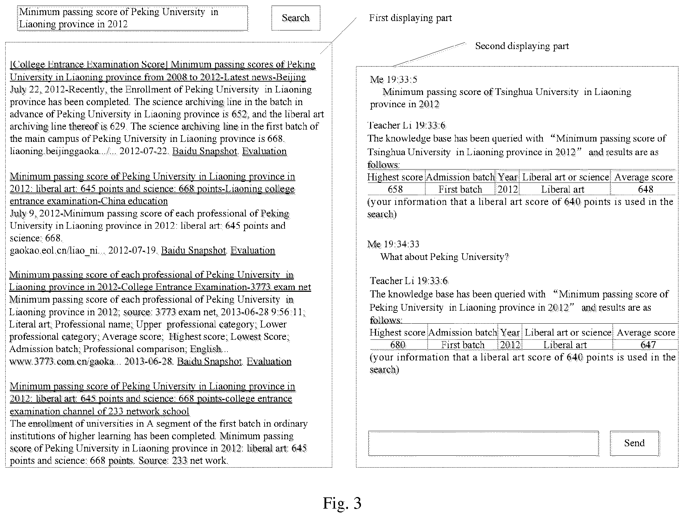

In embodiments of the present disclosure, after providing the search result webpage including the first displaying part and the second displaying part for the user, the client receives the interactive information input by the user in the interaction region, and obtains a second query and a second search result corresponding to the second query according to the interactive information and displays the second query and the second search result corresponding to the second query in the second displaying part. For example, the user searches "the minimum passing score of Tsinghua University in Liaoning province in 2012", the first search result is displayed in the conventional search result displaying region (i.e. the first displaying part) at the left side of the search result webpage and the dialogue search region at the right side of the search result webpage. If the user needs to search other information, he/she can input "what about Peking University?" in an input box of the interaction region. The second query "the minimum passing score of Peking University in Liaoning province in 2012" can be obtained by a query analyzing of the search engine, and then the client displays the second query "the minimum passing score of Peking University in Liaoning province in 2012" and the second search result corresponding to the second query in the dialogue search region. At the same time, as shown in Fig. 3, the second query "the minimum passing score of Peking University in Liaoning province in 2012" is also displayed in the search box at the left side, and the second search result corresponding to the second query is also displayed in the conventional search result displaying region (i.e. the first displaying part) at the left side. Certainly, if the second search result obtained in the second displaying part dissatisfies a search requirement of the user, the user can return to a conventional search mode to select the second search result in the first displaying part.

In embodiments of the present disclosure, the client may also display an interactive question or dialogue information in the second displaying part. Specifically, as shown in Table 1, taking an example of "voluntary reporting for college entrance examination", an interaction scene between the interactive question pushed by the search engine and the user is presented.

**Table 1**

| | **Interaction content** |
|---|---|
| User | What universities can a student be admitted to with a score of 600 points? |
| System | Which province are you from? |

| User | Beijing |
|---|---|
| System | Are you a liberal art student or a science student? |
| User | Science student |
| System | According to the minimum passing scores in past three years, the universities you may be admitted to include: ...... |
| System | What professional are you interested in? |
| User | Finance or economics |
| System | The above universities including finance or economics are: ...... |
| User | Whose finance is the best in the above universities including finance or economics? |
| System | Based on a ranking of teachers' qualification, Renmin University of China |

In addition, the client may display daily dialogue information such as "hello" and "what is your name?" that has nothing to do with the query of the deep decision type in the second displaying part, such that the user can make the interaction easily and smoothly.

With the interactive searching method according to an example of the present disclosure, by displaying the first query, the first search result and the interaction region configured to input interactive information in the second displaying part, an intelligent interaction with the user can be implemented when the user inputs a query of a deep decision type, such that a searching requirement of the user can be obtained accurately so as to provide a precise search result for the user and to provide an individual service for different users, thus satisfying the requirement of the user.

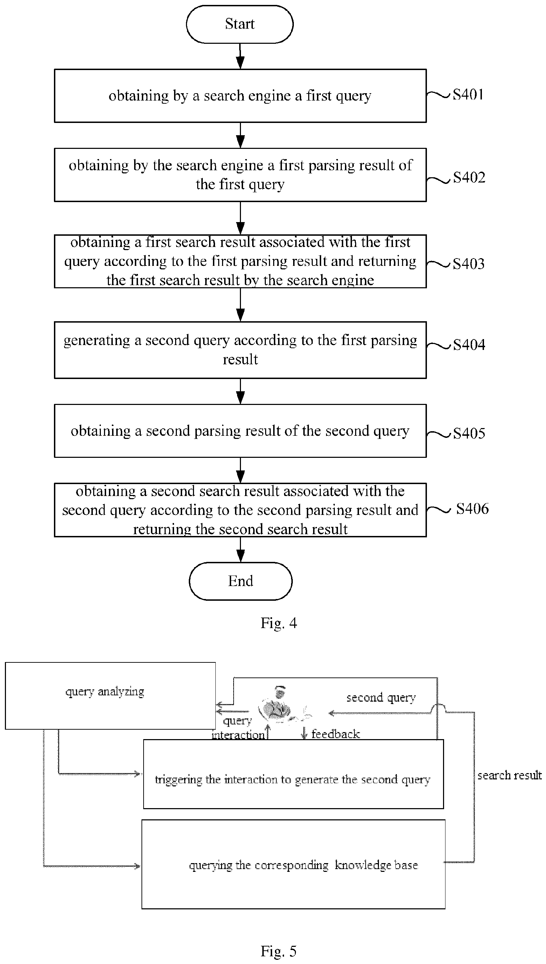

Fig. 4 is a flow chart of an interactive searching method according to another example of the present disclosure.

As shown in Fig. 4, the interactive searching method includes following steps.

At step S401, a search engine obtains a first query.

In an embodiment of the present disclosure, the client may receive the first query input by the user in the search box. The first query may be the simple key word such as "the weather in Beijing" and "Liu Dehua" or the complex phrase such as "the minimum passing score of Peking University in Liaoning province in 2012".

At step S402, the search engine obtains a first parsing result of the first query.

In an example of the present disclosure, after receiving the first query input by the user, the search engine performs at least one of a type identification, a semantic analysis, a synonymous rewrite, an interactive clarification and an information completion on the first query so as to obtain the first parsing result.

Specifically, based on a binary classification model, the type identification is performed according to a key-word feature and an interrogative feature to classify the first query, for example, to determine whether the first query belongs to a deep decision type.

The semantic analysis is performed to analyze a sentence structure and a semantic restrictive relative of the first query so as to understand a real meaning of the user. For example, "what universities can a student in Beijing be admitted to with a score of 600 points?" and "what universities in Beijing can a student be admitted to with a score of 600 points?" include completely identical key words. By the semantic analysis, it can be accurately identified that "what universities can a student in Beijing be admitted to with a score of 600 points?" means that what universities can a student in Beijing with a score of 600 points be admitted to, and "what universities in Beijing can a student be admitted to with a score of 600 points?" means that what are the universities in Beijing having a minimum passing score less than 600 points.

The synonymous rewrite is performed to replace a word beyond understanding in the first query with a synonym so as to perform an accurate search. For example, when the first query input by the user is "what universities can a student be admitted to with a score of 600 points?", it is hard for the search engine to understand a meaning of "be admitted to". Therefore, "what universities can a student be admitted to with a score of 600 points?" may be rewritten as "what are the universities having a minimum passing score less than or equal to 600 points?" by the synonymous rewrite, and thus an accurate search result can be obtained.

The interactive clarification is performed to clarify an ambiguous word. Taking an example of voluntary reporting for college entrance examination, the user inputs a query "how long is the history of 'history' of 'Shan University'?", it can be identified that "Shan university" is an ambiguous word which can be understood as Shandong University or Shanxi University and cannot be determined in a current context thereof, and thus an interactive question that "is 'Shan university' the Shandong University or Shanxi University?" may be provided for the user. Moreover, there are two "history" in the first query, and the second "history" may be understood as "history professional" and the first "history" may be understood as an original meaning thereof and not needed to be clarified.

The information completion is performed to mine global information helpful to the query from an individual model of the user and history information of the dialogue so as to complement the query. For example, the global information of voluntary reporting for college entrance examination further includes "province", "liberal art or science" and "score". If the user has indicated that he is in Liaoning province, when the first query is "what universities can a student be admitted to with a score of 600 points?", "Liaoning province" may be added to the first query so as to generate another query "what universities can a student in Liaoning province be admitted to with a score of 600 points?" without further interaction with the user.

At step S403, the search engine obtains a first search result associated with the first query according to the first parsing result and returns the first search result.

In an embodiment of the present disclosure, the search engine may establish and save a knowledge base. The knowledge base includes an entity knowledge base, a general requirement knowledge base and a FAQ (frequently asked question) knowledge base. Specifically, the entity knowledge base stores entitative triple knowledge and the triple includes an entity, an attribute and an attribute value. Taking an example of voluntary reporting for college entrance examination, the entity may include the university and professional, and the attribute includes a number of doctor stations in the university, a number of master stations in the university, a number of academicians in the university and a ranking of the university, and each attribute has a corresponding attribute value. When the entity knowledge base is established, the triple knowledge may be obtained by a template-based webpage parse and a mining technology firstly, and then a de-noising processing, an expression standardization processing and an attribute value unification processing (unifying various expressions of a establishing date of the university into an expression YYYY-MM-DD) are performed on the attribute and the attribute value, and finally the processed triple knowledge is stored in the entity knowledge base.

When the general requirement knowledge base is established, a general requirement knowledge query (such as "good universities having a lot of beauties" and "professionals providing a high salary") belonging to the predetermined type (such as voluntary reporting for college entrance examination) may be automatically obtained from massive amounts of query logs of the user so as to generate a set of general requirement queries. For each general requirement query in the set, a question having a same meaning as each general requirement query and an answer corresponding to the question may be searched automatically. Then, an answer entity may be extracted from the corresponding answer according to a knowledge extracting model. Taking an example of the general requirement query "good universities having a lot of beauties", a synonymous question "which good university has a lot of beauties?" or "what are the first-class universities having a lot of beauties?" may be searched automatically, and a plurality of candidate answers such as "BSD", "Beijing Film Academy" and "Beijing Dance Academy" can be extracted from answers to the synonymous question such as "apart from the art schools, BSD has a lot of beauties" and "the good universities having a lot of beauties shall be Beijing Film Academy and Beijing Dance Academy", and then the expression standardization processing is performed on the plurality of candidate answers, for example "BSD" is unified as "Beijing Normal University". Furthermore, the plurality of candidate answers are scored, sequenced and stored in the general requirement knowledge base.

When the FAQ knowledge base is established, a high-frequency query belonging to the predetermined type may be identified automatically from the massive amounts of query logs of the user by a type identification so as to generate a candidate set of common questions (such as "what is the parallel voluntary?" and "what is the meaning of the batch in advance?" in voluntary reporting for college entrance examination). The answer corresponding to the high-frequency query is obtained and serves as a pair of FAQ together with the high-frequency query. Finally, based on the binary classification model, a superior answer and an inferior answer are distinguished from each other, and the superior answer is saved to establish the FAQ knowledge base.

In the embodiment of the present disclosure, after the first parsing result is obtained, the search engine queries the corresponding knowledge base according to the first parsing result to obtain the first search result associated with the first query and returns the first search result to the client.

Specifically, when the first query belongs to the entity type, such as "the minimum passing score of Tsinghua University in Liaoning province", the search engine may query the entity knowledge base to obtain a corresponding entity search result.

When the first query belongs to the general requirement type, the search engine may query the general requirement knowledge base to obtain another general requirement query with a same meaning as the first query and a corresponding answer, and determine the corresponding answer as the first search result of the first query of the user.

When the first query is a common question belonging to the predetermined type, the search engine may query the FAQ knowledge base to obtain the corresponding answer, thus saving a time of selection and collection in search results.

When the first query belongs to the deep decision type, it is commonly needed for the user to compare a plurality of entities with each other. Taking an example of voluntary reporting for college entrance examination, the user generally tends to pay attention to a plurality of universities and intents to know advantages and disadvantages of the plurality of universities distinctly. Thus, based on the entity knowledge base, attribute values corresponding to a same attribute of different entities may be calculated and compared with each other automatically so as to obtain advantages and disadvantages of each attribute of the different entities. For two entities "Tsinghua University" and "Peking University", the number of academicians of "Tsinghua University" is 50 and a ranking of "Tsinghua University" is first; the number of academicians of "Peking University" is 55 and a ranking of "Peking University" is second, and thus "Peking University" is better than "Tsinghua University" in the attribute of "the number of academicians"; "Tsinghua University" is better than "Peking University" in the attribute of "ranking".

When the first query of the user belongs to an emotional tendency analysis type, for an object (such as "Shandong University") to be analyzed, answers and questions (such as questions "how is Shandong University?" and "how is a situation of teachers' qualification of Shandong University?" and corresponding answers) associated with comments of the object may be mined automatically. A comment point and tendency in each comment are identified automatically. For example, in a sentence "the teachers' qualification of Shandong University is very good, but a source of students in recent years is not so ideal", the object is "Shandong University", and there are two comment points as follows: a first comment point is "teachers' qualification", and the emotional tendency is "positive"; the second comment point is "source of students", and the emotional tendency is "negative". Therefore, all the comment points and tendencies of the object may be collected and summarized, and finally an emotional tendency analysis result may be obtained.

At step S404, the search engine generates a second query according to the first parsing result.

In the embodiment of the present disclosure, if the number of the first search result is larger than a predetermined threshold, it indicates that the first query is too board and the search requirement of the user cannot be satisfied. Thus, the interaction with the user may be triggered based on an information gain theory. Specifically, attribute information of the first search result is obtained, and at least one of a coverage degree and a division degree of the attribute information on the first search result are calculated to obtain a calculation result according to which the interactive question is obtained, and the interactive question is returned to the client for the user to make the interaction. Taking an example of voluntary reporting for college entrance examination, the user searches "the minimum passing score of Tsinghua University", since the minimum passing score of Tsinghua University includes the minimum passing score of liberal art and the minimum passing score of science and the minimum passing scores of liberal art and science are different in different provinces every year, the number of the first search results is large, such that it is not convenient for the user to obtain the information that he/she needs. Therefore, the interaction with the user is triggered, in which "province", "year", "liberal art or science" and "admission batch" are interaction attributes with the user. According to the first search result, the at least one of the coverage degree and the division degree of the attribute information on above attributes are calculated automatically to obtain a best attribute "province", i.e., an accurate search result may be obtained by the interaction with the user based on the attribute "province". Therefore, the interactive question "which province is the minimum passing score of Tsinghua University in?" is generated and returned to the client.

In the embodiment of the present disclosure, according to the first parsing result, other queries which may be needed may be recommended to the user automatically. Taking an example of voluntary reporting for college entrance examination, when the user searches "the minimum passing score of Tsinghua University", the query "do you want to know the minimum passing score of each professional of Tsinghua University?" may be recommended to the user on the premise of satisfying the query requirement of the user, and thus the user can be guided quickly and effectively when he is not sure what to search.

After the interactive question is returned to the client, the user can input the interactive information according to the interactive question obtained by the client. After receiving the interactive information input by the user, the client may generate the second query. For example, when the user inputs "the minimum passing score of Tsinghua University", the search engine feeds back the interactive question "which province are you from?" to the user. If the user feeds back the interactive information "I am from Liaoning province", the search engine identifies "Liaoning" automatically so as to generate the second query "the minimum passing score of Tsinghua University in Liaoning province". Certainly, the user may also input another query "the minimum passing score of Peking University" to perform another search without referring to the interactive question pushed by the search engine.

At step S405, a second parsing result of the second query is obtained.

In the embodiment of the present disclosure, the search engine may perform the parsing processing on the second query, in which the query analyzing further includes an anaphora resolution apart from those at step S402, thus obtaining the second parsing result of the second query.

In the anaphora resolution, a pronoun in the second query may be resolved according to context information. The anaphora resolution includes conditions. The first condition is pronoun reference. For example, when an above query is "what is the minimum passing score of Tsinghua University?" and a current query is "how many students has it enrolled in Liaoning province last year?", the pronoun "it" may be resolved as "Tsinghua University" by the anaphora resolution so as to generate another query "how many students has Tsinghua University enrolled in Liaoning province last year?". The second condition is omission reference. For example, when the above query is "what is the minimum passing score of Tsinghua University?" and a current query is "what about Peking University?", an omitted content "what is the minimum passing score?" can be restored by the anaphora resolution so as to generate another query "what is the minimum passing score of Peking University?".

At step S406, a second search result associated with the second query is obtained according to the second parsing result and returned to the client.

In the embodiment of the present disclosure, the search engine may query the knowledge base according to the second parsing result to obtain the second search result associated with the second query, which is substantially the same as that at step S403 and is omitted herein.

In an example of the present disclosure, the search engine may also return the daily dialogue information such as "hello" and "what is your name?" that has nothing to do with the query of the deep decision type to the client and receive answer information input by the user according to the dialogue information, thus forming the interaction with the user. Finally, the dialogue information and the answer information are stored in a dialogue base. In order to establish the dialogue base, the daily dialogues of net friends in the post bar may be mined automatically based on a post bar database on a large scale. The user can interact with the search engine of a natural language dialogue type easily and smoothly with the daily dialogue function.

With the interactive searching method according to embodiments of the present disclosure, by performing a query analyzing on the first query and the second query, the search engine can interact with the user intelligently when the user inputs a query of a deep decision type, such that a searching requirement of a user can be obtained accurately so as to obtain a precise search result for the user and to provide an individual service for different users, thus satisfying requirements of the user.

In order to achieve above embodiments, an interactive searching system is further provided.

Fig. 5 is a schematic diagram showing an interactive searching of an interactive searching system according to an embodiment of the present disclosure.

As shown in Fig. 5, a user inputs a query via a client. After receiving the query, a system performs a query analyzing on the query. After a type of a search requirement of the user is determined, a corresponding knowledge base may be queried according to the type of the search requirement so as to obtain a search result. After triggering an interaction with the user, the system makes an intelligent interaction with the user by questioning and answering, generates another query according to interactive information fed back by the user and further performs another search to obtain another search result which is finally returned to the client.

With the interactive searching system according to embodiments of the present disclosure, by deeply understanding the query, it is efficient for the user to solve the query of a deep decision type which is complex and has various expressions; with a deep interaction with the user and by utilizing content knowledge and individual knowledge of the user in the interaction, the search requirement of the user may be understood accurately and conveniently when the user performs the query of the deep decision type, such that the search result may be obtained accurately and conveniently, thus improving a search experience of the user.

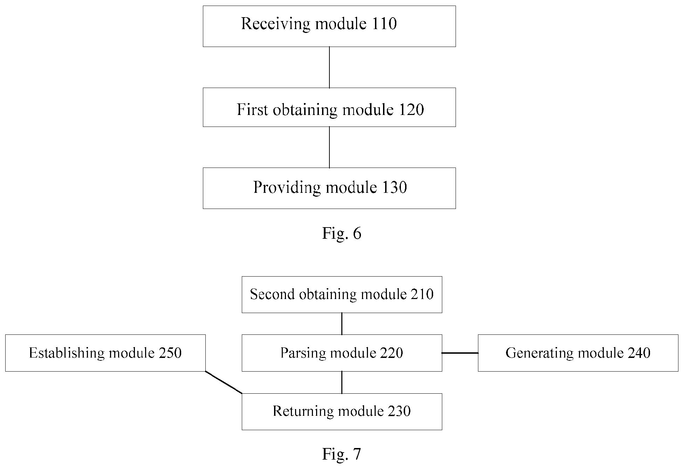

Fig. 6 is a block diagram of an interactive searching apparatus according to an example of the present disclosure, in which the embodiment of the present disclosure is described at a client side.

As shown in Fig. 6, the interactive searching apparatus according to examples of the present disclosure includes a receiving module 110, a first obtaining module 120 and a providing module 130.

Specifically, the receiving module 110 is configured to receive a first query.

In the embodiment of the present disclosure, the receiving module 110 may receive the first query input by the user in a search box. The first query may be a simple key word such as "the weather in Beijing" and "Liu Dehua" or a complex phrase such as "the minimum passing score of Peking University in Liaoning province in 2012".

The first obtaining module 120 is configured to obtain a first search result associated with the first query.

In an example of the present disclosure, the receiving module 110 sends the first query to the search engine after receiving the first query, and the search engine performs a search according to the first query and returns the first search result to the client. The first obtaining module 120 obtains the returned first search result associated with the first query. For example, the first query is "Liu Dehua", and the first search result is information associated with Liu Dehua such as a height, a birthday and a film thereof.

The providing module 130 is configured to display the first search result and an interaction region if it is determined that the first query belongs to a predetermined type.

In an example of the present disclosure, when it is determined that the first query belongs to the predetermined type, the providing module 130 provides a search result webpage including a first displaying part and a second displaying part. Specifically, when the first query is a query of a deep decision type such as "shopping guide", "voluntary reporting for college entrance examination" and "medical advice", the providing module 130 displays the first query, the first search result and the interaction region configured to input interactive information in a dialogue search region (i.e. the second displaying part) besides displaying the first search result in a conventional search result displaying region (i.e. the first displaying part). For example, as shown in Fig. 2, the user inputs the first query "the minimum passing score of Tsinghua University in Liaoning province in 2012" which is the query of the deep decision type belonging to "voluntary reporting for college entrance examination" in the search box at a left side of the search result webpage, and the first search result is displayed in the conventional search result displaying region (i.e. the first displaying part) at the left side of the search result webpage, and the first query, the first search result and the interaction region (such as an input box) configured to input interactive information are displayed in the dialogue search region (i.e. the second displaying part) at a right side of the search result webpage simultaneously.

The providing module 130 provides a search result webpage including the first displaying part if it is determined that the first query does not belong to the predetermined type. Specifically, when the first query is "Liu Dehua" which is not the query of the deep decision type, the providing module 130 just displays the first search result in the conventional search result displaying region (i.e. the first displaying part), i.e., the second displaying part does not exist.

In examples of the present disclosure, after the providing module 130 provides the search result webpage including the first displaying part and the second displaying part for the user, the receiving module 110 receives the interactive information input by the user in the interaction region, and the first obtaining module 120 obtains a second query and a second search result corresponding to the second query according to the interactive information, and then the providing module 130 displays the second query and the second search result corresponding to the second query in the second displaying part. For example, the user searches "the minimum passing score of Tsinghua University in Liaoning province in 2012", the first search result is displayed in the conventional search result displaying region (i.e. the first displaying part) at the left side of the search result webpage and the dialogue search region at the right side of the search result webpage. If the user needs to search other information, he/she can input "what about Peking University?" in an input box of the interaction region. The second query "the minimum passing score of Peking University in Liaoning province in 2012" can be obtained by a query analyzing of the search engine, and then the client displays the second query "the minimum passing score of Peking University in Liaoning province in 2012" and the second search result corresponding to the second query in the dialogue search region. At the same time, as shown in Fig. 3, the second query "the minimum passing score of Peking University in Liaoning province in 2012" is also displayed in the search box at the left side, and the second search result corresponding to the second query is also displayed in the conventional search result displaying region (i.e. the first displaying part) at the left side. Certainly, if the second search result obtained in the second displaying part dissatisfies a search requirement of the user, the user can return to a conventional search mode to select the second search result in the first displaying part.

In embodiments of the present disclosure, the providing module 130 displays an interactive question or dialogue information in the second displaying part. Specifically, as shown in Table 1, taking an example of "voluntary reporting for college entrance examination", an interaction scene between the interactive question pushed by the search engine and the user is presented.

In addition, the providing module 130 may display daily dialogue information such as "hello" and "what is your name?" that has nothing to do with the query of the deep decision type in the second displaying part, such that the user can make the interaction easily and smoothly.

With the interactive searching apparatus according to examples of the present disclosure, by displaying the first query, the first search result and the interaction region configured to input interactive information in the second displaying part, an intelligent interaction with the user can be implemented when the user inputs the query of the deep decision type, such that the searching requirement of the user can be obtained accurately so as to provide a precise search result for the user and to provide an individual service for different users, thus satisfying the requirement of the user.

Fig. 7 is a block diagram of an interactive searching apparatus according to another example of the present disclosure, in which the embodiment of the present disclosure will be described at a search engine side.

As shown in Fig. 7, the interactive searching apparatus according to examples of the present disclosure includes a second obtaining module 210, a parsing module 220, a returning module 230, a generating module 240 and an establishing module 250.

The second obtaining module 210 is configured to obtain the first query.

In an example of the present disclosure, the second obtaining module 210 may receive the first query input by the user in the search box. The first query may be the simple key word such as "the weather in Beijing" and "Liu Dehua" or the complex phrase such as "the minimum passing score of Peking University in Liaoning province in 2012".

The parsing module 220 is configured to obtain a first parsing result of the first query.

In an example of the present disclosure, after the second obtaining module 210 receives the first query input by the user, the parsing module 220 performs at least one of a type identification, a semantic analysis, a synonymous rewrite, an interactive clarification and an information completion on the first query so as to obtain the first parsing result.

The returning module 230 is configured to obtain a first search result associated with the first query according to the first parsing result and to return the first search result.

In an example of the present disclosure, after the parsing module 220 obtains the first parsing result, the returning module 230 queries a corresponding knowledge base to obtain the first search result associated with the first query and returns the first search result to the client.

In the embodiment of the present disclosure, according to the first parsing result, other queries which may be needed may be recommended to the user by the returning module 230 automatically. Taking an example of voluntary reporting for college entrance examination, when the user searches "the minimum passing score of Tsinghua University", the query "do you want to know the minimum passing score of each professional of Tsinghua University?" may be recommended to the user on the premise of satisfying the query requirement of the user, and thus the user can be guided quickly and effectively when he is not sure what to search.

In an example of the present disclosure, the returning module 230 may also return the daily dialogue information such as "hello" and "what is your name?" that has nothing to do with the query of the deep decision type to the client and receive answer information input by the user according to the dialogue information, thus forming the interaction with the user. Finally, the returning module 230 stores the dialogue information and the answer information in a dialogue base.

The generating module 240 is configured to generate a second query according to the first parsing result.

In the embodiment of the present disclosure, if the number of the first search result is larger than a predetermined threshold, it indicates that the first query is too board and the search requirement of the user cannot be satisfied. Thus, the generating module 240 may trigger the interaction with the user based on an information gain theory. Specifically, attribute information of the first search result is obtained, and at least one of a coverage degree and a division degree of the attribute information on the first search result are calculated to obtain a calculation result according to which the interactive question is obtained, and the interactive question is returned to the client for the user to make the interaction. Taking an example of voluntary reporting for college entrance examination, the user searches "the minimum passing score of Tsinghua University", since the minimum passing score of Tsinghua University includes the minimum passing score of liberal art and the minimum passing score of science and the minimum passing scores of liberal art and science are different in different provinces every year, the number of the first search results is large, such that it is not convenient for the user to obtain the information that he/she needs. Therefore, the interaction with the user may be triggered, in which "province", "year", "liberal art or science" and "admission batch" are interaction attributes with the user. According to the first search result, the at least one of the coverage degree and the division degree of the attribute information on above attributes are calculated automatically to obtain a best attribute "province", i.e., an accurate search result may be obtained by the interaction with the user based on the attribute "province". Therefore, the interactive question "which province is the minimum passing score of Tsinghua University in?" is generated and returned to the client.

After the returning module 230 returns the interactive question to the client, the user can input the interactive information according to the interactive question obtained by the client. The generating module 240 may generate the second query according to the interactive information input by the user. For example, when the user inputs "the minimum passing score of Tsinghua University", the search engine feeds back the interactive question "which province are you from?" to the user. If the user feeds back the interactive information "I am from Liaoning province", the search engine identifies "Liaoning" automatically so as to generate the second query "the minimum passing score of Tsinghua University in Liaoning province". Certainly, the user may also input another query "the minimum passing score of Peking University" to perform another search without referring to the interactive question pushed by the search engine. After the generating module 240 generates the second query according to the interactive information input by the user, the parsing module 220 may perform the query analyzing on the second query to obtain a second parsing result. The returning module 230 obtains a second search result associated with the second query according to the second parsing result.

The establishing module 250 is configured to establish and save the knowledge base.

In an
embodiment of the present disclosure, the knowledge base includes an entity knowledge base, a general requirement knowledge base and a FAQ knowledge base. Specifically, the entity knowledge base stores entitative triple knowledge and the triple includes an entity, an attribute and an attribute value. Taking an example of voluntary reporting for college entrance examination, the entity may include the university and professional, and the attribute includes a number of doctor stations in the university, a number of master stations in the university, a number of academicians in the university and a ranking of the university, and each attribute has a corresponding attribute value. When the entity knowledge base is established, the triple knowledge may be obtained by a template-based webpage parse and a mining technology firstly, and then a de-noising processing, an expression standardization processing and an attribute value unification processing (unifying various expressions of a establishing date of the university into an expression YYYY-MM-DD) are performed on the attribute and the attribute value, and finally the processed triple knowledge is stored in the entity knowledge base.

When the general requirement knowledge base is established, a general requirement knowledge query (such as "good universities having a lot of beauties" and "professionals providing a high salary") belonging to the predetermined type (such as voluntary reporting for college entrance examination) may be automatically obtained from massive amounts of query logs of the user so as to generate a set of general requirement queries. For each general requirement query in the set, a question having a same meaning as each general requirement query and an answer corresponding to the question may be searched automatically. Then, an answer entity may be extracted from the corresponding answer according to a knowledge extracting model. Taking an example of the general requirement query "good universities having a lot of beauties", a synonymous question "which good university has a lot of beauties?" or "what are the first-class universities having a lot of beauties?" may be searched automatically, and a plurality of candidate answers such as "BSD", "Beijing Film Academy" and "Beijing Dance Academy" can be extracted from answers to the synonymous question such as "apart from the art schools, BSD has a lot of beauties" and "the good universities having a lot of beauties shall be Beijing Film Academy and Beijing Dance Academy", and then the expression standardization processing is performed on the plurality of candidate answers, for example "BSD" is unified as "Beijing Normal University". Furthermore, the plurality of candidate answers are scored, sequenced and stored in the general requirement knowledge base.

When the FAQ knowledge base is established, a high-frequency query belonging to the predetermined type may be identified automatically from the massive amounts of query logs of the user by a type identification so as to generate a candidate set of common questions (such as "what is the parallel voluntary?" and "what is the meaning of the batch in advance?" in voluntary reporting for college entrance examination). The answer corresponding to the high-frequency query is obtained and serves as a pair of FAQ together with the high-frequency query. Finally, based on the binary classification model, a superior answer and an inferior answer are distinguished from each other, and the superior answer is saved so as to establish the FAQ knowledge base.

By performing the query analyzing on the first query and the second query, the interactive searching apparatus according to embodiments of the present disclosure can interact with the user intelligently when the user inputs the query of the deep decision type, such that the searching requirement of the user can be obtained accurately so as to provide a precise search result for the user and to provide an individual service for different users, thus improving a search experience of the user.

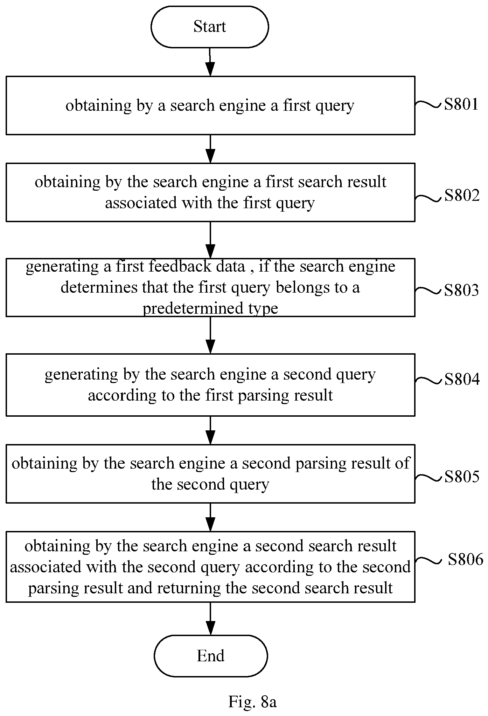

Fig. 8a is a flow chart of an interactive searching method according to another embodiment of the present disclosure.

As shown in Fig. 8a, the interactive searching method includes following steps.

At step S801, the search engine obtains the first query.

In the embodiment of the present disclosure, the search engine may receive the first query input by the user in the search box. The first query may be the simple key word such as "the weather in Beijing" and "Liu Dehua" or the complex phrase such as "the minimum passing score of Peking University in Liaoning province in 2012".

At step S802, the search engine obtains the first search result associated with the first query.

In the embodiment of the present disclosure, the search engine may obtain the first parsing result of the first query and further obtain the first search result associated with the first query according to the first parsing result. Specifically, the search engine performs at least one of the type identification, the semantic analysis, the synonymous rewrite, the interactive clarification and the information completion on the first query so as to obtain the first parsing result.

Specifically, based on the binary classification model, the type identification is performed according to the key-word feature and the interrogative feature to classify the first query, for example, to determine whether the first query belongs to the deep decision type.

The semantic analysis is performed to analyze the sentence structure and the semantic restrictive relative of the first query so as to understand the real meaning of the user. For example, "what universities can a student in Beijing be admitted to with a score of 600 points?" and "what universities in Beijing can a student be admitted to with a score of 600 points?" include completely identical key words. However, by the semantic analysis, it can be accurately identified that "what universities can a student in Beijing be admitted to with a score of 600 points?" means that what universities can a student in Beijing with a score of 600 points be admitted to, and "what universities in Beijing can a student be admitted to with a score of 600 points?" means that what are the universities in Beijing having a minimum passing score less than 600 points.

The synonymous rewrite is performed to replace the word beyond understanding in the first query with the synonym so as to perform an accurate search. For example, when the first query input by the user is "what universities can a student be admitted to with a score of 600 points?", it is hard for the search engine to understand the meaning of "be admitted to". Therefore, "what universities can a student be admitted to with a score of 600 points?" may be rewritten as "what are the universities having a minimum passing score less than or equal to 600 points?" by the synonymous rewrite, and thus an accurate search result can be obtained.

The interactive clarification is performed to clarify an ambiguous word. Taking an example of voluntary reporting for college entrance examination, the user inputs a query "how long is the history of 'history' of 'Shan University'?", it can be identified that "Shan university" is an ambiguous word which can be understood as Shandong University or Shanxi University and cannot be determined in the current context thereof, and thus an interactive question that "is 'Shan university' the Shandong University or Shanxi University?" may be provided for the user. Moreover, there are two "history" in the first query, and the second "history" may be understood as "history professional" and the first "history" may be understood as an original meaning thereof and not needed to be clarified.

The information completion is performed to mine the global information helpful to the query from the individual model of the user and the history information of the dialogue so as to complement the query. For example, the global information of voluntary reporting for college entrance examination further includes "province", "liberal art or science" and "score". If the user has indicated that he is in Liaoning province, when the first query is "what universities can a student be admitted to with a score of 600 points?", "Liaoning province" may be added to the first query so as to generate another query "what universities can a student in Liaoning province be admitted to with a score of 600 points?" without further interaction with the user.

In the embodiment of the present disclosure, the search engine may establish and save the knowledge base. The knowledge base includes the entity knowledge base, the general requirement knowledge base and the FAQ knowledge base. Specifically, the entity knowledge base stores entitative triple knowledge and the triple includes an entity, an attribute and an attribute value. Taking an example of voluntary reporting for college entrance examination, the entity may include the university and professional, and the attribute includes the number of doctor stations in the university, the number of master stations in the university, the number of academicians in the university and the ranking of the university, and each attribute has a corresponding attribute value. When the entity knowledge base is established, the triple knowledge may be obtained by the template-based webpage parse and the mining technology firstly, and then the de-noising processing, the expression standardization processing and the attribute value unification processing (unifying various expressions of a establishing date of the university into an expression YYYY-MM-DD) are performed on the attribute and the attribute value, and finally the processed triple knowledge is stored in the entity knowledge base.

When the general requirement knowledge base is established, the general requirement knowledge query (such as "good universities having a lot of beauties" and "professionals providing a high salary") belonging to the predetermined type (such as voluntary reporting for college entrance examination) may be automatically obtained from massive amounts of query logs of the user so as to generate the set of general requirement queries. For each general requirement query in the set, the question having a same meaning as each general requirement query and the answer corresponding to the question may be searched automatically. Then, the answer entity may be extracted from the corresponding answer according to the knowledge extracting model. Taking an example of the general requirement query "good universities having a lot of beauties", a synonymous question "which good university has a lot of beauties?" or "what are the first-class universities having a lot of beauties?" may be searched automatically, and the plurality of candidate answers such as "BSD", "Beijing Film Academy" and "Beijing Dance Academy" can be extracted from answers to the synonymous question such as "apart from the art schools, BSD has a lot of beauties" and "the good universities having a lot of beauties shall be Beijing Film Academy and Beijing Dance Academy", and then the expression standardization processing is performed on the plurality of candidate answers, for example "BSD" is unified as "Beijing Normal University". Furthermore, the plurality of candidate answers are scored, sequenced and stored in the general requirement knowledge base.

When the FAQ knowledge base is established, the high-frequency query belonging to the predetermined type may be identified automatically from the massive amounts of query logs of the user by the type identification so as to generate the candidate set of common questions (such as "what is the parallel voluntary?" and "what is the meaning of the batch in advance?" in voluntary reporting for college entrance examination). The answer corresponding to the high-frequency query is obtained and serves as the pair of FAQ together with the high-frequency query. Finally, based on the binary classification model, the superior answer and the inferior answer are distinguished from each other, and the superior answer is saved to establish the FAQ knowledge base.

In the embodiment of the present disclosure, after the first parsing result is obtained, the search engine queries the corresponding knowledge base according to the first parsing result to obtain the first search result associated with the first query and returns the first search result to the client.

Specifically, when the first query belongs to the entity type, such as "the minimum passing score of Tsinghua University in Liaoning province", the search engine may query the entity knowledge base to obtain the corresponding entity search result.

When the first query belongs to the general requirement type, the search engine may query the general requirement knowledge base to obtain another general requirement query with a same meaning as the first query and a corresponding answer, and determine the corresponding answer as the first search result of the first query of the user.

When the first query is a common question belonging to the predetermined type, the search engine may query the FAQ knowledge base to obtain the corresponding answer, thus saving the time of selection and collection in search results.

When the first query belongs to the deep decision type, it is commonly needed for the user to compare a plurality of entities with each other. Taking an example of voluntary reporting for college entrance examination, the user generally tends to pay attention to a plurality of universities and intents to know advantages and disadvantages of the plurality of universities distinctly. Thus, based on the entity knowledge base, attribute values corresponding to the same attribute of different entities may be calculated and compared with each other automatically so as to obtain advantages and disadvantages of each attribute of the different entities. For two entities "Tsinghua University" and "Peking University", the number of academicians of "Tsinghua University" is 50 and the ranking of "Tsinghua University" is first; the number of academicians of "Peking University" is 55 and the ranking of "Peking University" is second, and thus "Peking University" is better than "Tsinghua University" in the attribute of "the number of academicians"; "Tsinghua University" is better than "Peking University" in the attribute of "ranking".

When the first query of the user belongs to the emotional tendency analysis type, for the object (such as "Shandong University") to be analyzed, the pair of FAQ (such as questions "how is Shandong University?" and "how is a situation of teachers' qualification of Shandong University?" and corresponding answers) associated with comments of the object may be mined automatically. The comment point and tendency in each comment are identified automatically. For example, in the sentence "the teachers' qualification of Shandong University is very good, but a source of students in recent years is not so ideal", the object is "Shandong University", and there are two comment points as follows: the first comment point is "teachers' qualification", and the emotional tendency is "positive"; the second comment point is "source of students", and the emotional tendency is "negative". Therefore, all the comment points and tendencies of the object may be collected and summarized, and finally the emotional tendency analysis result may be obtained.

At step S803, the search engine generates a first feedback data configured to display the first search result associated with the first query and the interactive region in the search result webpage, if determining that the first query belongs to the predetermined type.

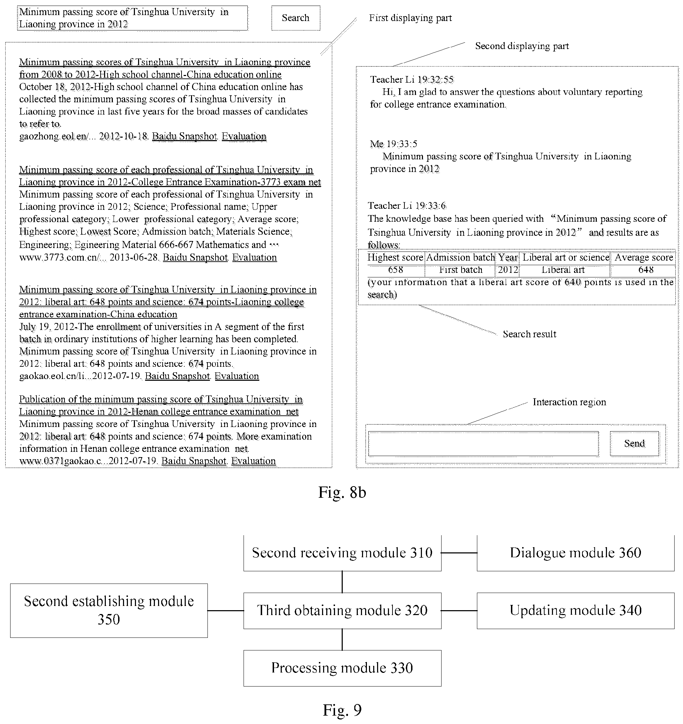

In an example of the present disclosure, when determining that the first query belongs to the predetermined type, the search engine generates the first feedback data configured to display the first search result associated with the first query and the interactive region in the search result webpage. Specifically, when the first query is the query of the deep decision type such as "shopping guide", "voluntary reporting for college entrance examination" and "medical advice", the first query, the first search result and the interaction region configured to input the interactive information are displayed in the dialogue search region (i.e. the second displaying part) and the first search result is also displayed in the conventional search result displaying region (i.e. the first displaying part). For example, as shown in Fig. 2, the user inputs the first query "the minimum passing score of Tsinghua University in Liaoning province in 2012" which is the query of the deep decision type belonging to "voluntary reporting for college entrance examination" in the search box at the left side of the search result webpage, and thus the first search result is displayed in the conventional search result displaying region (i.e. the first displaying part) at the left side of the search result webpage, and the first query, the first search result and the interaction region (such as an input box) configured to input the interactive information are displayed in the dialogue search region (i.e. the second displaying part) at the right side of the search result webpage simultaneously, as shown in Fig. 8b.

In an example of the present disclosure, when determining that the first query does not belong to the predetermined type, the search engine generates a second feedback data configured to display the first search result associated with the first query in the search result webpage. Specifically, when the first query is "Liu Dehua" which is not the query of the deep decision type, the first search result is just displayed in the conventional search result displaying region (i.e. the first displaying part), i.e., the second displaying part does not exist.

At step S804, the search engine generates the second query according to the first parsing result.

Descriptions of step S804 are identical with those of step S404 and are omitted herein.

At step S805, the search engine obtains the second parsing result of the second query.

Descriptions of step S805 in the embodiment of the present disclosure are identical with those of step S405 in above embodiments and are omitted herein.

At step S806, the search engine obtains the second search result associated with the second query according to the second parsing result and returns the second search result associated with the second query.

Descriptions of step S8 are identical with those of step S403 are omitted herein.

In an example of the present disclosure, the search engine may also provide the daily dialogue information such as "hello" and "what is your name?" that has nothing to do with the query of the deep decision type for the user and receive the answer information input by the user according to the dialogue information, thus forming the interaction with the user. Finally, the dialogue information and the answer information are stored in a dialogue base. In order to establish the dialogue base, the daily dialogues of net friends in the post bar may be mined automatically based on a post bar database on a large scale. The user can interact with the search engine of the natural language dialogue type easily and smoothly with the daily dialogue function.

With the interactive searching method according to embodiments of the present disclosure, by displaying the first search result associated with the first query and the interactive region in the search result webpage and performing the query analyzing on the first query and the second query input by the user, the search engine can interact with the user intelligently when the user inputs the query of the deep decision type, such that the searching requirement of the user can be obtained accurately so as to obtain a precise search result for the user and to provide an individual service for different users, thus satisfying requirements of the user.

Fig. 9 is a block diagram of an interactive searching apparatus according to another example of the present disclosure.

As shown in Fig. 9, the interactive searching apparatus according to embodiments of the present disclosure includes: a second receiving module 310, a third obtaining module 320, a processing module 330, an updating module 340, an establishing module 350 and a dialogue module 360.

The second receiving module 310 is configured to obtain the first query.

In this example of the present disclosure, the second receiving module 310 receives the first query input by the user in the search box. The first query may be the simple key word such as "the weather in Beijing" and "Liu Dehua" or the complex phrase such as "the minimum passing score of Peking University in Liaoning province in 2012".

The third obtaining module 320 is configured to obtain the first search result associated with the first query.

In an example of the present disclosure, the third obtaining module 320 obtains the first parsing result of the first query and further obtains the first search result associated with the first query according to the first parsing result. Specifically, the third obtaining module 320 performs at least one of the type identification, the semantic analysis, the synonymous rewrite, the interactive clarification and the information completion on the first query so as to obtain the first parsing result.

The processing module 330 is configured to generate a first feedback data configured to display the first search result associated with the first query and the interactive region in the search result webpage, if it is determined that the first query belongs to the predetermined type.

In an example of the present disclosure, when it is determined by the search engine that the first query belongs to the predetermined type, the processing module 330 generates the first feedback data configured to display the first search result associated with the first query and the interactive region in the search result webpage. Specifically, when the first query is the query of the deep decision type such as "shopping guide", "voluntary reporting for college entrance examination" and "medical advice", the first query, the first search result and the interaction region configured to input the interactive information are displayed in the dialogue search region (i.e. the second displaying part) and the first search result is also displayed in the conventional search result displaying region (i.e. the first displaying part). For example, as shown in Fig. 2, the user inputs the first query "the minimum passing score of Tsinghua University in Liaoning province in 2012" which is the query of the deep decision type belonging to "voluntary reporting for college entrance examination" in the search box at the left side of the search result webpage, and thus the first search result is displayed in the conventional search result displaying region (i.e. the first displaying part) at the left side of the search result webpage, and the first query, the first search result and the interaction region (such as an input box) configured to input the interactive information are displayed in the dialogue search region (i.e. the second displaying part) at the right side of the search result webpage simultaneously.

In an example of the present disclosure, when the search engine determines that the first query does not belong to the predetermined type, the processing module 330 generates a second feedback data configured to display the first search result associated with the first query in the search result webpage. Specifically, when the first query is "Liu Dehua" which is not the query of the deep decision type, the first search result is just displayed in the conventional search result displaying region (i.e. the first displaying part), i.e., the second displaying part does not exist.

The updating module 340 is configured to generate the second query according to the first parsing result.

Specifically, when the first parsing result satisfies a predetermined condition, the updating module 340 is configured to obtain the interactive question to be displayed in the second displaying part, to obtain the interactive information via the interaction region and to generate the second query according to the interactive information. For example, when the first parsing result belongs to the deep decision type such as voluntary reporting for college entrance examination, the user inputs "the minimum passing score of Tsinghua University", and the search engine feeds back the interactive question "which province are you from?" to the user. If the user feeds back the interactive information "I am from Liaoning province", the search engine identifies "Liaoning" automatically so as to generate the second query "the minimum passing score of Tsinghua University in Liaoning province". Certainly, the user may also input another query "the minimum passing score of Peking University" to perform another search without referring to the interactive question pushed by the search engine.

The establishing module 350 is configured to establish and save the knowledge base. The knowledge base includes the entity knowledge base, the general requirement knowledge base and the FAQ knowledge base.

Specifically, the entity knowledge base stores the entitative triple knowledge and the triple includes an entity, an attribute and an attribute value. Taking an example of voluntary reporting for college entrance examination, the entity may include the university and professional, and the attribute includes the number of doctor stations in the university, the number of master stations in the university, the number of academicians in the university and the ranking of the university, and each attribute has a corresponding attribute value. When the entity knowledge base is established, the triple knowledge may be obtained by the template-based webpage parse and the mining technology firstly, and then the de-noising processing, the expression standardization processing and the attribute value unification processing (unifying various expressions of a establishing date of the university into an expression YYYY-MM-DD) are performed on the attribute and the attribute value, and finally the processed triple knowledge is stored in the entity knowledge base.

When the general requirement knowledge base is established, the general requirement knowledge query (such as "good universities having a lot of beauties" and "professionals providing a high salary") belonging to the predetermined type (such as voluntary reporting for college entrance examination) may be automatically obtained from massive amounts of query logs of the user so as to generate the set of general requirement queries. For each general requirement query in the set, the question having a same meaning as each general requirement query and the answer corresponding to the question may be searched automatically. Then, the answer entity may be extracted from the corresponding answer according to the knowledge extracting model. Taking an example of the general requirement query "good universities having a lot of beauties", a synonymous question "which good university has a lot of beauties?" or "what are the first-class universities having a lot of beauties?" may be searched automatically, and the plurality of candidate answers such as "BSD", "Beijing Film Academy" and "Beijing Dance Academy" can be extracted from answers to the synonymous question such as "apart from the art schools, BSD has a lot of beauties" and "the good universities having a lot of beauties shall be Beijing Film Academy and Beijing Dance Academy", and then the expression standardization processing is performed on the plurality of candidate answers, for example "BSD" is unified as "Beijing Normal University". Furthermore, the plurality of candidate answers are scored, sequenced and stored in the general requirement knowledge base.

When the FAQ knowledge base is established, the high-frequency query belonging to the predetermined type may be identified automatically from the massive amounts of query logs of the user by the type identification so as to generate the candidate set of common questions (such as "what is the parallel voluntary?" and "what is the meaning of the batch in advance?" in voluntary reporting for college entrance examination). The answer corresponding to the high-frequency query is obtained and serves as the pair of FAQ together with the high-frequency query. Finally, based on the binary classification model, the superior answer and the inferior answer are distinguished from each other, and the superior answer is saved to establish the FAQ knowledge base.

The dialogue module 360 is configured to provide dialogue information, to obtain answer information corresponding to the dialogue information and to store the dialogue information and the answer information in a dialogue base.

In an example of the present disclosure, the dialogue module 360 may also provide the daily dialogue information such as "hello" and "what is your name?" that has nothing to do with the query of the deep decision type for the user and receive the answer information input by the user according to the dialogue information, thus forming the interaction with the user. Finally, the dialogue information and the answer information are stored in the dialogue base. In order to establish the dialogue base, the daily dialogues of net friends in the post bar may be mined automatically based on the post bar database on a large scale. The user can interact with the search engine of the natural language dialogue type easily and smoothly with the daily dialogue function.

With the interactive searching apparatus according to examples of the present disclosure, by displaying the first search result associated with the first query and the interactive region in the search result webpage and performing the query analyzing on the query input by the user, the search engine can interact with the user intelligently when the user inputs the query of the deep decision type, such that the searching requirement of the user can be obtained accurately so as to obtain a precise search result for the user and to provide the individual service for different users, thus satisfying requirements of the user.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc. It should be noted that, although the present disclosure has been described with reference to the embodiments, it will be appreciated by those skilled in the art that the disclosure includes other examples that occur to those skilled in the art to execute the disclosure. Therefore, the present disclosure is not limited to the embodiments.

The appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure.

## Claims

1. An interactive searching method, comprising:
receiving by a search engine a first query;
parsing by the search engine the first query to obtain a first parsing result of the first query, wherein the parsing operation comprises at least one of a type identification, a semantic analysis, a synonymous rewrite, an interactive clarification and an information completion;
obtaining by the search engine a plurality of first search results associated with the first query according to the first parsing result;
returning by the search engine the plurality of first search results in a first displaying part in a search result webpage;
if the number of first search results is larger than a predetermined threshold, displaying a dialogue box to interact with the user and to obtain, as inputs from the user in response to automatically generated interactive questions, information to complement the first query,
wherein the dialogue box is displayed in a second displaying part in the search result webpage of the client device;
receiving by the search engine the obtained information to complement the query from the user, to generate a second query from the first query and the information received;
parsing by the search engine the second query to obtain a second parsing result of the second query, wherein the parsing operation comprises at least one of the type identification, the semantic analysis, the synonymous rewrite, the interactive clarification and the information completion;
obtaining by the search engine a plurality of second search results associated with the second query according to the second parsing result; and
returning the plurality of second search results by the search engine to replace the first search result in the first displaying part in the search result webpage.

2. The method according to claim 1, further comprising: establishing a knowledge base comprising an entity knowledge base, a general requirement knowledge base and a FAQ knowledge base, and specially obtaining by the search engine the first search result associated with the first query according to the first parsing result comprises: querying the knowledge base according to the first parsing result to obtain the first search result associated with the first query; and obtaining by the search engine the second search result associated with the second query according to the second parsing result comprises: querying the knowledge base according to the second parsing result to obtain the second search result associated with the second query.

3. A system for interactive searching with a processor and memory, the memory comprising instructions such that, when executed by a processor, cause the processor to execute a method of interactive searching according to claim 1 or 2.

4. The system according to claim 3, further comprising an establishing module configured to establish a knowledge base comprising an entity knowledge base, a general requirement knowledge base and a FAQ knowledge base, and specially the obtaining module is configured to: query the knowledge base according to the first parsing result to obtain the first search result associated with the first query; and query the knowledge base according to the second parsing result to obtain the second search result associated with the second query.

## Patentansprüche

1. Interaktives Suchverfahren, umfassend:
Empfangen einer ersten Anfrage durch eine Suchmaschine;
Parsen der ersten Anfrage durch die Suchmaschine, um ein erstes Parse-Ergebnis der ersten Anfrage zu erhalten, wobei die Pars-Operation wenigstens eines von einer Typenidentifikation, einer semantischen Analyse, einer synonymen Neufassung, einer interaktiven Klärung und einer Informationsergänzung umfasst;
Erhalten einer Vielzahl erster Suchergebnisse durch die Suchmaschine, die mit der ersten Anfrage gemäß dem ersten Parse-Ergebnis assoziiert sind;
Zurückführen der Vielzahl erster Suchergebnisse durch die Suchmaschine in einem ersten Anzeigeteil in einer Suchergebniswebseite;
wenn die Anzahl erster Suchergebnisse größer als eine vorbestimmte Schwelle ist, Anzeigen einer Dialogbox, um mit dem Nutzer zu interagieren, um als Eingaben von dem Nutzer in Reaktion auf automatisch erzeugte interaktive Fragen Information zu erhalten, um die erste Anfrage zu ergänzen,
wobei die Dialogbox in einem zweiten Anzeigeteil in der Suchergebniswebseite des Client-Geräts angezeigt wird;
Empfangen der erhaltenen Information durch die Suchmaschine, um die Anfrage von dem Nutzer zu ergänzen, um eine zweite Anfrage aus der ersten Anfrage und der empfangenen Information zu erzeugen;
Parsen der zweiten Anfrage durch die Suchmaschine, um ein zweites Parse-Ergebnis der zweiten Anfrage zu erhalten, wobei die Parse-Operation wenigstens eines der Typenidentifikation, der semantischen Analyse, der synonymen Neufassung, der interaktiven Klärung und der Informationsergänzung umfasst;
Erhalten einer Vielzahl zweiter Suchergebnisse durch die Suchmaschine, die mit der zweiten Anfrage gemäß dem zweiten Parse-Ergebnis assoziiert sind; und
Zurückführen der Vielzahl zweiter Suchergebnisse durch die Suchmaschine, um das erste Suchergebnis in dem ersten Anzeigeteil in der Suchergebniswebseite zu ersetzen.

2. Verfahren nach Anspruch 1, weiterhin umfassend: Aufbauen einer Wissensbasis, die eine Objektwissensbasis, eine Allgemeinanforderungswissensbasis und eine FAQ-Wissensbasis umfasst, und insbesondere Erhalten, durch die Suchmaschine, des ersten Suchergebnisses, das mit der ersten Anfrage gemäß dem ersten Parse-Ergebnis assoziiert ist, umfassend: Abfragen der Wissensbasis gemäß dem ersten Parse-Ergebnis, um das erste Suchergebnis zu erhalten, das mit der ersten Anfrage assoziiert ist; und Erhalten des zweiten Suchergebnisses durch die Suchmaschine, das mit der zweiten Anfrage assoziiert ist, gemäß dem zweiten Parse-Ergebnis, umfassend: Abfragen der Wissensbasis gemäß dem zweiten Parse-Ergebnis, um das zweite Suchergebnis zu erhalten, das mit der zweiten Anfrage assoziiert ist.

3. System zum interaktiven Suchen mit einem Prozessor und einem Speicher, wobei der Speicher Anweisungen umfasst, so dass, wenn sie durch einen Prozessor ausgeführt werden, sie den Prozessor veranlassen, ein Verfahren zum interaktiven Suchen gemäß Anspruch 1 oder 2 auszuführen.

4. System nach Anspruch 3, das weiterhin ein Aufbaumodul umfasst, das konfiguriert ist, um eine Wissensbasis aufzubauen, das eine Objektwissensbasis, eine Allgemeinanforderungswissensbasis und eine FAQ-Wissensbasis umfasst, wobei insbesondere das Erhaltmodul konfiguriert ist zum: Abfragen der Wissensbasis gemäß dem ersten Parse-Ergebnis, um das erste Suchergebnis zu erhalten, das mit der ersten Anfrage assoziiert ist; und Abfragen der Wissensbasis gemäß dem zweiten Parse-Ergebnis, um das zweite Suchergebnis zu erhalten, das mit der zweiten Anfrage assoziiert ist.

## Revendications

1. Procédé de recherche interactive, comprenant :
la réception par un moteur de recherche d'une première requête ;
l'analyse par le moteur de recherche de la première requête pour obtenir un premier résultat d'analyse de la première requête, où l'opération d'analyse comprend au moins l'un parmi une identification de type, une analyse sémantique, une réécriture synonyme, une clarification interactive et un complément d'informations ;
l'obtention par le moteur de recherche d'une pluralité de premiers résultats de recherche associés à la première requête en fonction du premier résultat d'analyse ;
le retour par le moteur de recherche de la pluralité de premiers résultats de recherche dans une première partie d'affichage dans une page Web de résultats de recherche ;
si le nombre de premiers résultats de recherche est supérieur à un seuil prédéterminé, l'affichage d'une boîte de dialogue pour interagir avec l'utilisateur et pour obtenir, comme entrées en provenance de l'utilisateur en réponse à des questions interactives générées automatiquement, des informations pour compléter la première requête,
dans lequel la boîte de dialogue est affichée dans une seconde partie d'affichage dans la page Web de résultats de recherche du dispositif client ;
la réception par le moteur de recherche des informations obtenues pour compléter la requête en provenance de l'utilisateur, pour générer une seconde requête à partir de la première requête et des informations reçues ;
l'analyse par le moteur de recherche de la seconde requête pour obtenir un second résultat d'analyse de la seconde requête, où l'opération d'analyse comprend au moins l'un parmi l'identification de type, l'analyse sémantique, la réécriture synonyme, la clarification interactive et le complément d'informations ;
l'obtention par le moteur de recherche d'une pluralité de seconds résultats de recherche associés à la seconde requête en fonction du second résultat d'analyse ; et
le retour de la pluralité de seconds résultats de recherche par le moteur de recherche pour remplacer le premier résultat de recherche dans la première partie d'affichage dans la page Web de résultats de recherche.

2. Procédé selon la revendication 1, comprenant en outre: l'établissement d'une base de connaissances comprenant une base de connaissances d'entité, une base de connaissances d'exigence générale et une base de connaissances de FAQ, et en particulier l'obtention par le moteur de recherche du premier résultat de recherche associé à la première requête en fonction du premier résultat d'analyse comprend : l'interrogation de la base de connaissances en fonction du premier résultat d'analyse pour obtenir le premier résultat de recherche associé à la première requête ; et l'obtention par le moteur de recherche du second résultat de recherche associé à la seconde requête en fonction du second résultat d'analyse comprend : l'interrogation de la base de connaissances en fonction du second résultat d'analyse pour obtenir le second résultat de recherche associé à la seconde requête.

3. Système pour une recherche interactive avec un processeur et une mémoire, la mémoire comprenant des instructions telles que, lorsqu'elles sont exécutées par un processeur, amènent le processeur à exécuter un procédé de recherche interactive selon la revendication 1 ou 2.

4. Système selon la revendication 3, comprenant en outre un module d'établissement configuré pour établir une base de connaissances comprenant une base de connaissances d'entité, une base de connaissances d'exigence générale et une base de connaissances de FAQ, et en particulier le module d'obtention est configuré pour : interroger la base de connaissances en fonction du premier résultat d'analyse pour obtenir le premier résultat de recherche associé à la première requête ; et interroger la base de connaissances en fonction du second résultat d'analyse pour obtenir le second résultat de recherche associé à la seconde requête.
